Europäisches Patentamt

European Patent Office

Office européen des brevets

(11) Numéro de publication: **0 173 780**
**A1**

(12) # DEMANDE DE BREVET EUROPEEN

(21) Numéro de dépôt: 84401692.3

(22) Date de dépôt: 20.08.84

(51) Int. Cl.⁴: **H 01 H 15/10**
**H 01 H 27/00, H 02 B 1/20**

(43) Date de publication de la demande:
12.03.86 Bulletin 86/11

(84) Etats contractants désignés:
DE GB IT

(71) Demandeur: SOCIETE FRANCAISE METALLO Société
Anonyme
56 rue Antoine Marie Colin
F-94400 Vitry sur Seine(FR)

(72) Inventeur: Cassan, Daniel
6 Rue Moulin d'Amboile
F-94370 Sucy-En-Brie(FR)

(74) Mandataire: Letheule, Jacqueline
5 Rue José-Maria de Hérédia
F-75007 Paris(FR)

(54) Préselecteur matriciel.

(57) L'invention concerne less dispositifs de préselection matriciels du type comportant des moyens pour mettre en contact au moins un élément conducteur parmi une rangée de premiers conducteurs, avec au moins un élément conducteur parmi une rangée de seconds conducteurs s'étendant transversalement.

Dans l'example représenté les éléments conducteurs sont constitués par des rubans (20, 22) inclus respectivement dans deux plans parallèles à une distance prédéterminée. Une pluralité de moyens (28) sont prévus en surplomb de chaque intersection entre un ruban (20) et un ruban (22) afin d'assurer sous l'effet d'une poussée un contact par déformation élastique entre ceux-ci. Ils sont complétés par des moyens de blocage (25, 36).

Applications: associés à des microcesseurs à des fins de programmation.

FIG.1

EP 0 173 780 A1

Croydon Printing Company Ltd

PRESELECTEUR MATRICIEL.

La présente invention concerne les dispositifs de présélection matriciels, du type comportant des moyens pour mettre en contact au moins un conducteur parmi une rangée de premiers conducteurs avec au moins un conducteur parmi une rangée de seconds conducteurs s'étendant transversalement aux premiers, destinés notamment à être associés à des dispositifs numériques, tels que des microprocesseurs, à des fins de programmation de ceux-ci.

On connaît déjà des présélecteurs matriciels qui présentent un certain nombre d'inconvénients : ils sont complexes, onéreux, et leur montage ne peut généralement pas être effectué de façon automatisée. En outre, ils sont encombrants et présentent une étanchéité aux poussières et au ruissellement non satisfaisante; enfin leur isolation n'est pas satisfaisante dans le cas où ils véhiculent des tensions élevées, par exemple la tension du secteur.

La présente invention a pour objet de pallier ces inconvénients et de proposer un dispositif de présélection matricielle du type précité qui soit simple, résistant, et qui puisse en outre être miniaturisé.

Un autre objet de la présente invention est de proposer un dispositif qui puisse être fabriqué de façon simple, rapide et automatisée pour un moindre coût.

Enfin, un autre objet de l'invention est de proposer un dispositif qui présente une étanchéité et une isolation par rapport au secteur satisfaisantes.

A cet effet la présente invention concerne un dispositif de présélection matricielle, du type comprenant deux ensembles d'éléments conducteurs allongés, les éléments du premier et du second ensembles s'étendant respectivement transversalement les uns aux autres, caractérisé par le fait que lesdits ensembles sont inclus respectivement dans deux plans parallèles et séparés d'une distance prédéterminée, et qu'il comprend une pluralité de moyens agencés pour pouvoir prendre place respectivement en surplomb de chaque intersection entre un élément du premier ensemble et un élément du second ensemble, destinés à pousser ledit premier élément contre ledit second élément, afin d'assurer un contact électrique par déformation élastique entre ceux-ci.

De façon préférée, des moyens de verrouillage sont en outre prévus, associés aux moyens de poussée, afin de bloquer ces derniers dans une position pour laquelle ils établissent le contact électrique entre les deux éléments.

Il est en outre avantageux que les moyens de poussée comprennent des bouchons isolants destinés à être verrouillés en position en effectuant un quart de tour dans des orifices prévus dans le boîtier à cet effet en surplomb desdites intersections.

L'invention sera mieux comprise à la lecture de la description suivante de deux formes de réalisation préférées du dispositif selon l'invention, faite en référence au dessin annexé, sur lequel :

- la figure 1 est une élévation latérale, partiellement en coupe, d'une première forme de réalisation du dispositif de l'invention ,

- la figure 2 est une vue de dessus, partiellement en coupe, du dispositif de la figure 1,

- les figures 3a et 3b sont des vues de dessus de parties du dispositif de l'invention,

- la figure 4 est une élévation latérale en coupe d'une partie d'une seconde forme de réalisation du dispositif selon l'invention, et

- la figure 5 est une vue en coupe transversale d'une autre partie du dispositif de la figure 4.

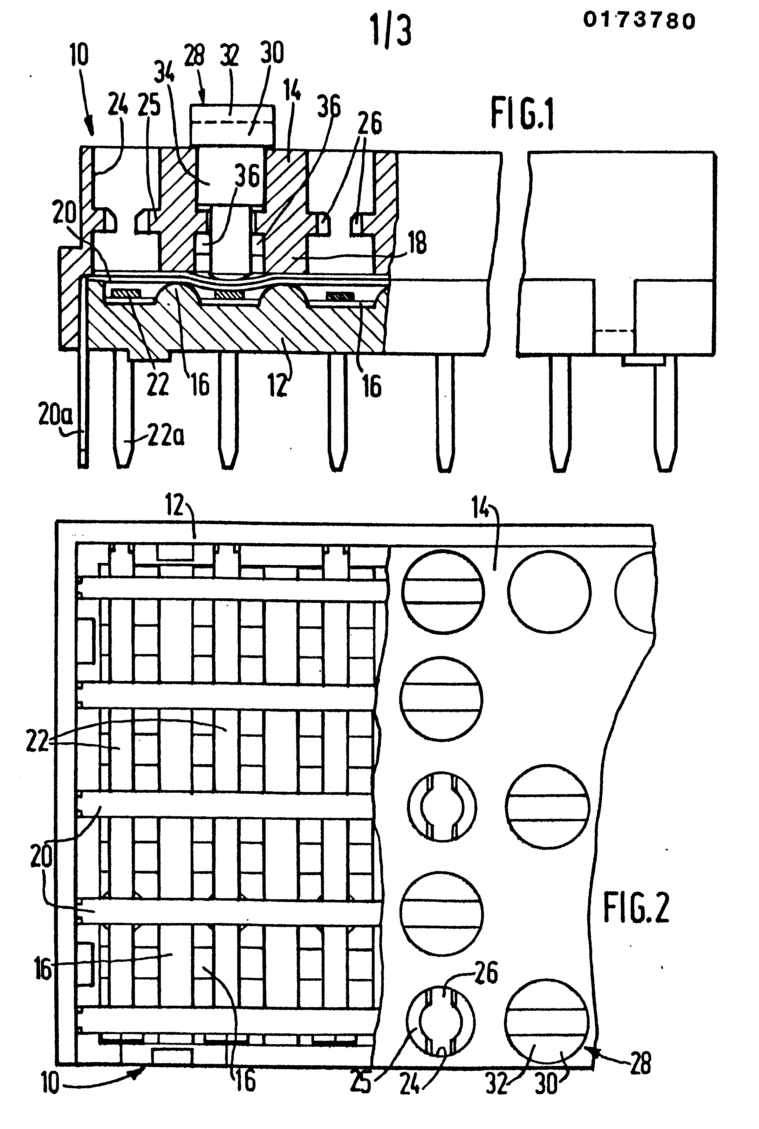

En référence aux figures 1 et 2, la première forme de réalisation du dispositif comporte un boîtier parallélipipédique 10 constitué d'un fond 12 et d'un capot 14, qui sont respectivement munis de butées protubérantes 16 et 18 agencées pour maintenir en place respectivement deux ensembles de barres de contact 20, 22 s'étendant perpendiculairement les uns aux autres, de façon à ce qu'ils soient respectivement situés dans deux plans horizontaux espacés d'une distance prédéterminée.

Les barres de contact sont constituées de rubans plats flexibles, par exemple en cuivre, et présentent, à une de leurs extrémités, une broche, respectivement 20a, 22a, repliée à 90° vers le bas, et destinée par exemple au raccordement du présélecteur à un circuit imprimé. A cet effet, des rubans parallèles peuvent être distants les uns des autres d'une distance normalisée, par exemple 2,54 mm, 3,81 mm ou 5,08 mm. Les rubans conducteurs de chaque ensemble sont orientés à 90° les uns par rapport aux autres comme on le voit sur la figure 2.

Sur le capot 14 sont prévus une série d'orifices sensiblement cylindriques 24, situés à l'aplomb de chaque intersection d'un ruban 20 du premier ensemble et d'un ruban 22 du second ensemble. Chaque orifice 24 présente un gradin annulaire de verrouillage 25, défini partiellement sur la périphérie radiale de l'orifice et laissant deux évidements

axiaux 26 diamétralement opposés; le présélecteur selon cette première forme de réalisation comprend en outre des bouchons 28, en matière isolante, agencés pour s'engager dans des orifices 24 préalablement sélectionnés, afin d'établir le contact entre un ruban prédéterminé 20 du premier ensemble, et un ruban prédéterminé 22 du second ensemble; pour ce faire, chaque bouchon 28 est muni d'une tête cylindrique 30 d'un diamètre plus large que celui de l'orifice 24, et présentant sur sa surface supérieure une saillie transversale, 32, plane et verticale, destinée à faciliter l'agrippement par l'opérateur. Les bouchons 28 comprennent en outre un corps cylindrique en gradin 34, la partie de plus grand diamètre, correspondant à celui de l'orifice 24, étant adjacente à la tête 32, et la partie de plus petit diamètre, à l'autre extrémité, présentant deux ergots diamétraux de verrouillage 36, et son extrémité étant arrondie.

Lorsque l'on souhaite établir un contact électrique entre deux rubans transversaux 20a, 22a préalablement sélectionnés, on introduit un bouchon 28 dans l'orifice 24 situé à l'aplomb de l'endroit où les deux rubans prédéterminés sont superposés, de façon à ce que les deux ergots 36 traversent les évidements 26; simultanément, l'extrémité inférieure du bouchon 28 pousse le premier ruban 20a, situé dans le plan le plus élevé, localement, par déformation élastique entre deux butées adjacentes 16, contre le ruban 22a qui le croise à cet endroit. Puis le verrouillage est effectué en tournant le bouchon 28 d'un quart de tour, de façon à ce que les ergots 36 s'engagent sous le gradin annulaire 25, pour bloquer l'ensemble dans cette position et rendre permanent ledit contact.

Tous les contacts sont libérables par les opérations inverses, et on prévoira autant de bouchons 28 que de contacts à établir.

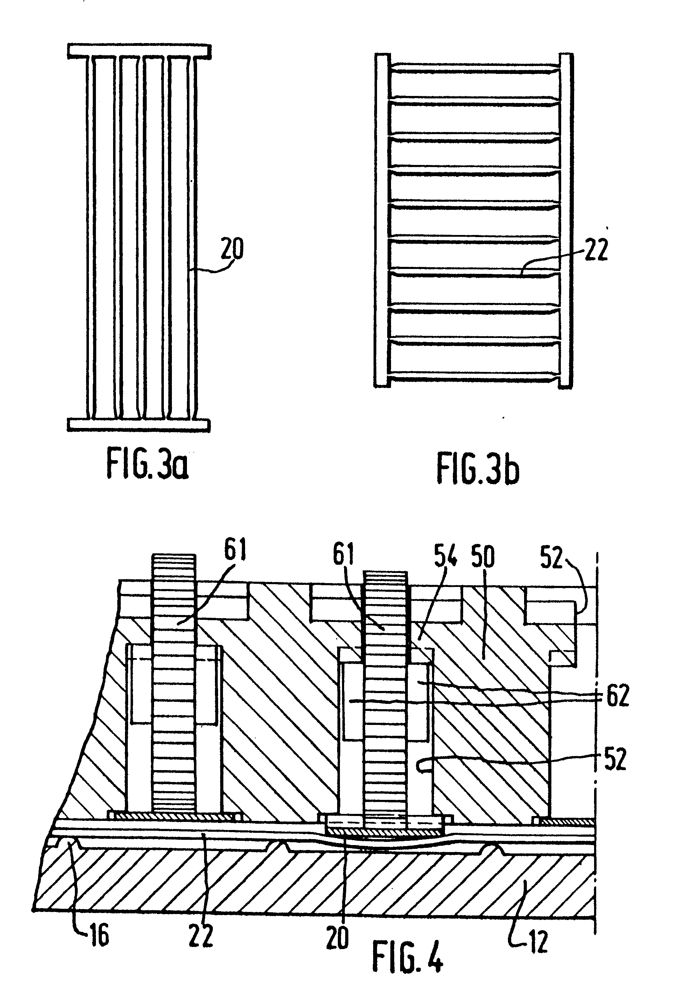

Sur les figures 3a et 3b sont représentées respectivement

5           0173780

deux ensembles de rubans 20, 22 , maintenus en place
avant l'assemblage par des bandes latérales, parallèlement
les uns aux autres, à la distance appropriée mentionnée
plus haut. Une fois que le montage des ensembles de rubans
a été effectué sur le fond 12 du boîtier, ces bandes sont
découpées et les extrémités des rubans sont disposées pour
être repliées pour tenir lieu de broches de raccordement,
comme mentionné plus haut. Cet aménagement brièvement décrit
permet avantageusement une grande simplification et une
automatisation éventuelle du montage de l'ensemble, grâce
à la mise en place grandement facilitée des ensembles de
rubans. Cet aménagement s'applique à la première forme de
réalisation décrite plus haut, ainsi qu'à la seconde forme
de réalisation dont la description suit.

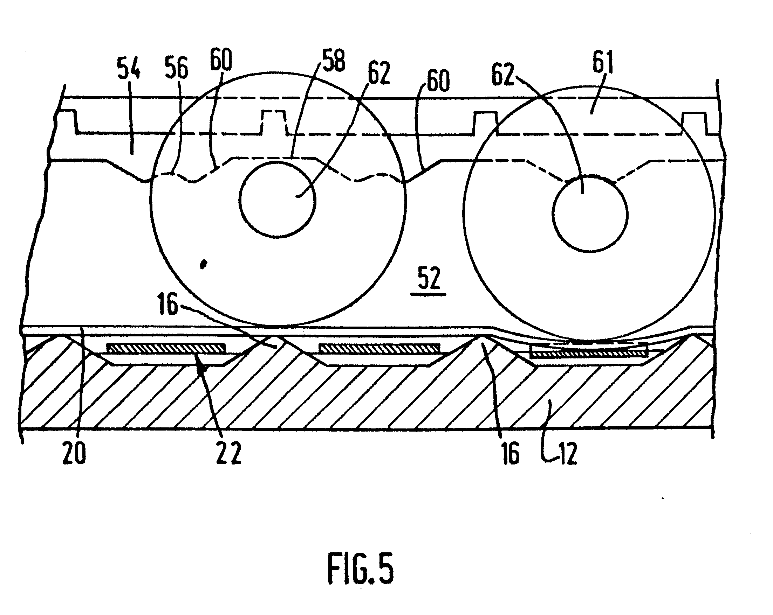

En référence aux figures 4 et 5, des numéros de référence
identiques désignent des parties identiques à celles des
figures 1 et 2.

Le fond 12 du boîtier, ainsi que les rubans de contact
20, 22, sont sensiblement identiques à ceux de la première
forme de réalisation.

Cependant le capot 50 présente une série de rainures
longitudinales rectilignes 52, situées chacune à l'aplomb
d'un ruban conducteur supérieur 20. Autant de rainures sont
prévues qu'il y a de rubans 20. De part et d'autre de
chaque rainure est prévu un gradin rectiligne 54 comportant
des surfaces de came ou profilés, définies de la façon
décrite ci-dessous. A l'aplomb de chaque ruban transversal
22 est prévu un renfoncement partiellement cylindrique 56,
et entre chacun de ces renfoncements 56, peu profonds, est
prévu un renfoncement 58 plus profond, les renfoncements
56 et 58 étant reliés, à la surface, par des plans inclinés
de came 60.

Dans chacune des rainures 52 est agencée pour circuler une molette en forme de disque 61, dentelée au moins sur sa périphérie supérieure, à des fins d'agrippement.

De part et d'autre de la molette 61 sont prévus, coaxiaux avec elle, deux moyeux cylindriques 62 dont les surfaces périphériques sont agencées pour coopérer avec les surfaces profilées des gradins 54 adjacents.

Comme on le voit sur la figure 5, la molette représentée à gauche est située longitudinalement entre deux rubans conducteurs 22. Le renfoncement 58 du gradin 54 est assez profond pour que la surface périphérique inférieure de la molette 54 ne soit pas en contact avec , ou effleure le ruban longitudinal 20 qui lui est associé.

Alors ledit ruban 20 n'est en contact électrique avec aucun des rubans transversaux 22. Lorsque l'on déplace la molette 61, par exemple par poussée du doigt sur sa périphérie supérieure dentelée, le long de la rainure, alors les moyeux latéraux 62 "gravissent " les plans inclinés de came 60 associés à l'un des renfoncements les moins profonds 56, de façon à venir se loger dans celui-ci, la surface périphérique inférieure de la molette poussant simultanément le ruban 20 associé contre le ruban transversal 22 en surplomb duquel est situé le renfoncement peu profond 56 concerné, pour obtenir un contact électrique entre les deux rubans par déformation élastique du ruban 20 entre deux butées adjacentes précédemment décrites 16.

On peut ainsi, en faisant glisser une molette choisie, dans sa rainure, sélectionner sa position et donc un contact avec deux rubans 20, 22 transversaux l'un à l'autre prédéterminés.

Cette seconde forme de réalisation est avantageuse en ce que l'on peut subminiaturiser le présélecteur de façon poussée et réaliser par exemple un présélecteur matriciel à 5 molettes pouvant chacune prendre dix positions de contact dont les dimensions n'excèdent pas 3 cm x 5 cm.

Une troisième forme de réalisation, non représentée , consiste à remplacer les bouchons de la première forme de réalisation par des boutons-poussoirs non verrouillables, normalement rappelés en une position n'établissant pas le contact, par exemple par des ressorts, et destinés à être poussés de façon fugitive pour établir un contact impulsionnel entre deux rubans conducteurs choisis. Cette troisième forme de réalisation s'applique en particulier aux dispositifs de sécurité à numéros de code, dans lesquels un code prédéterminé est à presser du doigt successivement par l'utilisateur sur des touches, pour déclencher par exemple l'ouverture d'une porte. Cette troisième forme de réalisation simplifie avantageusement ces systèmes, en les rendant moins onéreux.

On pourra également prévoir d'associer les rubans 20,22 à des contacts d'intersection par effleurement, ou tout autre système de détection d'une action mécanique ou électrostatique sur un croisement.

Bien entendu l'invention n'est décrite ici qu'à titre d'exemple, et toutes les modifications que pourra y apporter l'Homme de l'Art dans le cadre de l'utilisation de ses connaissances normales demeurent dans la portée de l'invention telle que revendiquée.

8

0173780

- R E V E N D I C A T I O N S -
----------------------------------

1. Dispositif de présélection matricielle, du type comprenant (a) deux ensembles d'éléments conducteurs électriques allongés (20, 22) surmontés d'un capot rigide (14; 50), les éléments du premier et du second ensemble s'étendant non parallèlement les uns aux autres et étant inclus respectivement dans deux plans parallèles et séparés d'une distance prédéterminée, (b) des moyens (28; 61) agencés pour pouvoir prendre place dans ledit capot respectivement en surplomb de chaque intersection entre un élément (20) du premier ensemble et un élement (22) du second ensemble, et pour pousser ledit premier élément contre ledit second élément afin d'assurer un contact électrique, par déformation élastique du premier élément, et (c) des moyens de verrouillage (25, 36; 56, 62) des moyens de poussée (28; 61) dans une position dans laquelle ils assurent ledit contact électrique, caractérisé en ce que les moyens de verrouillage comprennent, sur les moyens de poussée (28; 61), au moins une partie en saillie (36; 62) et, sur la face du capot (14; 50) tournée vers lesdits éléments (20, 22), au moins un renfoncement (25; 56) agencé pour recevoir ladite partie en saillie (36; 62), ladite partie en saillie étant retenue dans ledit renfoncement par la force de rappel élastique dirigée vers le haut exercée par le premier élément (20) soumis à une déformation élastique.

2. Dispositif selon la revendication 1, caractérisé en ce que les moyens de poussée comprennent en bouchon en matière électriquement isolante (28) agencé pour être engagé dans un orifice (24) prévu dans le capot (14) à l'aplomb de chaque intersection entre deux éléments conducteurs non parallèles (20, 22), la partie en saillie comprenant au moins un ergot latéral (36) et le renfoncement étant défini par un gradin annulaire (25) prévu sur la périphérie intérieure de l'orifice (24).

3. Dispositif selon la revendication 2, caractérisé en ce que le bouchon (28) présente deux ergots latéraux (36) diamétralement opposés.

4. Dispositif selon la revendication 1, caractérisé en ce que les moyens de poussée comprennent au moins un molette en forme de disque vertical (61) agencée pour pousser par sa périphérie inférieure un élément (20) du premier ensemble vers le bas contre un élément (22) du second ensemble, et pour pouvoir se déplacer le long d'au moins une rainure (52) prévue dans le capot (50) à l'aplomb d'un élément (20) du premier ensemble, la partie en saillie des moyens de verrouillage comprenant au moins un moyeu latéral (62) solidaire de la molette (61) et le renfoncement (56) étant prévu sur la face inférieure d'un gradin (54) s'étendant le long de ladite rainure (52).

5.    Dispositif selon la revendication 4, caractérisé en ce que chaque molette (61) comporte un moyeu (62) sur chacune de ses faces latérales, un gradin (54) étant prévu de part et d'autre de chaque rainure (52).

FIG.1

FIG.2

1/3

0173780

FIG.3a

FIG.3b

FIG. 4

FIG.5

Office européen
des brevets

**RAPPORT DE RECHERCHE EUROPEENNE**

**0173780**
Numéro de la demande

EP 84 40 1692

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int Cl 4) |
|---|---|---|---|
| Y | IBM TECHNICAL DISCLOSURE BULLETIN, vol. 8, no. 1, juin 1965, page 23, New York, US; H.L. FUNK et al.: "Pin board" * En entier * | 1-3 | H 01 H 15/10<br>H 01 H 27/00<br>H 02 B 1/20 |
| Y | US-A-3 900 709 (SHEESLEY) * Colonne 2, ligne 38 - colonne 4, ligne 29; colonne 5, ligne 59 - colonne 6, ligne 21 * | 1-3 | |
| Y | US-A-4 322 588 (CHUMLEY) * En entier * | 1,4,5 | |
| Y | US-A-3 146 320 (WANG) * Colonne 1, ligne 71 - colonne 2, ligne 62 * | 1,4,5 | |
| | | | **DOMAINES TECHNIQUES RECHERCHES (Int. Cl.4)** |
| A | CH-A- 437 464 (BROWN BOVERI) * Colonne 3, lignes 2-36 * | 1-3 | |
| A | FR-A-2 441 260 (THOMSON) | 1 | H 01 H 15/00<br>H 01 H 27/00<br>H 02 B 1/00<br>H 01 H 13/00 |
| E | FR-A-2 541 523 (METALLO) * En entier * | 1-5 | |

Le present rapport de recherche a ete établi pour toutes les revendications

| Lieu de la recherche | Date d'achèvement de la recherche | Examinateur |
|---|---|---|
| LA HAYE | 04-04-1985 | DESMET W.H.G. |